# EUROPEAN PATENT APPLICATION

(11) **EP 4 852 065 A1**
(43) Date of publication of application: **09.12.2026**
(21) Application number: 24926115.7
(22) Date of filing: 14.03.2024
(51) Int. Cl.: H01M 4/04, B30B 3/00, B30B 3/04, B30B 15/30, B22F 3/18, B22F 3/02, G01F 23/80

(54) **CONTINUOUS QUANTITATIVE SUPPLY DEVICE FOR ELECTRODE MATERIAL POWDER**

(30) Priority: 21.02.2024 KR 20240024987
(71) Applicant: People & Technology Inc., Gumi-si, Gyeongsangbuk-do 39422 (KR)
(72) Inventor: KIM, Joonsup, Gumi-si Gyeongsangbuk-do 39422 (KR); SHIN, Soonwoo, Gumi-si Gyeongsangbuk-do 39212 (KR); LEE, Youngcheol, Gumi-si Gyeongsangbuk-do 39275 (KR); HWANG, Jeonggyu, Gumi-si Gyeongsangbuk-do 39178 (KR)
(74) Representative: BCKIP Part mbB
(86) International application number: PCT/KR2024/003260
(87) International publication number: WO 2025/178166

(57) **Abstract**

The present invention relates to a continuous quantitative supply device for electrode material powder. The device comprises: a hopper which receives electrode material powder supplied from the outside and discharges the powder downward; a grooved roll which is horizontally installed at the lower portion of the hopper and has formed in the outer circumference thereof a plurality of powder transport grooves extending in the circumferential direction; a first driver which rotates the grooved roll; a press roll which is parallel to the grooved roll and compresses the electrode material powder into the powder transport grooves while allowing the electrode material powder to pass through between the press roll and the grooved roll; a scraper which separates the electrode material powder stuck in the powder transport grooves of the grooved roll from the powder transport grooves; and a rolling unit which rolls the electrode material powder separated by the scraper, while allowing the electrode material powder to pass therethrough. The continuous quantitative supply device for electrode material powder of the present invention, configured as described above, can continuously and quantitatively supply electrode material powder, thereby allowing a dry electrode film having a uniform density and thickness to be manufactured. Also, because the amount of electrode material powder supplied can be easily adjusted, the production speed of an electrode film can be easily adjusted.

## Description

### [Technical Field]

The present invention relates to a powder supply apparatus for a secondary-battery electrode material and, more particularly, to an apparatus for continuously supplying a fixed amount of electrode material powder, which enables the manufacture of a dry electrode film having a uniform density and thickness by continuously supplying a fixed amount of secondary-battery electrode material powder.

### [Background Art]

Unlike a primary battery that is discarded after a single use, a lithium secondary battery is rechargeable and reusable and has higher output and superior charge-discharge performance than other secondary batteries. Accordingly, lithium secondary batteries are widely used in various fields, ranging from mobile information technology devices, such as smartphones and notebook computers, to power sources for electric vehicles and energy storage systems for storing electric power generated by wind power generation or solar power generation.

As is well known, a secondary battery has a basic configuration including a positive electrode, a negative electrode, an electrolyte, and a separator. Each of the positive electrode and the negative electrode is manufactured by preparing a slurry by dispersing or dissolving an active material, a conductive material, and a binder in a solvent, coating the slurry on a current collector, and then performing an electrode process including drying, an assembly process, and an activation process, thereby producing a secondary-battery cell.

However, a wet electrode manufacturing method using a solvent may cause defects, such as pinholes or cracks, during a drying process. The pinholes or cracks occur as the solvent contained in the slurry evaporates. In addition, a powder-floating phenomenon may occur due to differences in the solvent evaporation rate, and the powder-floating phenomenon may deteriorate electrode quality.

To solve the above-described problems, a dry manufacturing method for manufacturing an electrode without using a solvent has been developed. In the dry manufacturing method, electrode material powder including an active material, a binder, and a conductive material is passed between calender rolls. The electrode material powder that has passed through the calender rolls is formed into a dry electrode film having a predetermined thickness and is laminated and fixed to a current collector.

In this regard, Korean Patent Application Publication No. 10-2022-0052852, entitled "Electrode Powder for Manufacturing a Dry Electrode for a Secondary Battery, Method for Manufacturing the Same, Method for Manufacturing a Dry Electrode Using the Same, Dry Electrode, Secondary Battery Including the Same, Energy Storage Device, and Apparatus for Manufacturing a Dry Electrode," has been disclosed.

The disclosed dry electrode manufacturing apparatus includes: a blender configured to mix electrode mixture raw materials including an active material, a conductive material, and a binder; a kneader configured to knead the mixture to form a mass of the mixture in order to fibrillate the binder; a pulverizer configured to pulverize the mass of the mixture to form electrode powder; a calender configured to form the electrode powder into an electrode mixture film; and a lamination roll configured to position and laminate the electrode mixture film on at least one surface of a current collector.

Meanwhile, uniformity in thickness and density is important for the electrode mixture film described above. The thickness and density should not vary locally and should be uniform throughout the entire electrode mixture film. To achieve such uniformity, it is important to supply a fixed amount of the electrode powder, that is, the electrode material powder. However, conventional dry electrode manufacturing apparatuses do not employ a technique for supplying a fixed amount of electrode material powder.

### [Detailed Description of the Invention]

### [Technical Problem]

The present invention has been made to solve the above-described problems, and an object of the present invention is to provide an apparatus for continuously supplying a fixed amount of electrode material powder, which enables the manufacture of a dry electrode film having a uniform density and thickness by continuously supplying a fixed amount of electrode material powder and allows a production speed of the electrode film to be adjusted.

### [Technical Solution]

As a technical solution for achieving the above object, an apparatus for continuously supplying a fixed amount of electrode material powder according to the present invention includes: a hopper configured to receive electrode material powder supplied from an outside and discharge the electrode material powder downward; a groove roll horizontally disposed at a lower portion of the hopper and having, on an outer circumferential surface thereof, a plurality of powder transfer grooves extending in a circumferential direction; a first driving unit configured to rotate the groove roll; a press roll arranged parallel to the groove roll and configured to allow the electrode material powder to pass between the press roll and the groove roll and press the electrode material powder into the powder transfer grooves; a scraper configured to separate the electrode material powder embedded in the powder transfer grooves of the groove roll from the powder transfer grooves; and a rolling unit configured to allow the electrode material powder transferred by the groove roll to pass therethrough and roll the electrode material powder.

A reverse roll is further provided at a side of the groove roll and is configured to rotate in a forward direction or a reverse direction or remain stationary by means of a second driving unit while being in contact with the outer circumferential surface of the groove roll.

A guide block is mounted below the groove roll and the reverse roll, is spaced apart from the outer circumferential surface of the groove roll by a predetermined distance, and is configured to guide the electrode material powder released from the powder transfer grooves to the rolling unit.

Each of the powder transfer grooves is a groove having a predetermined width and depth and defined by ring-shaped protrusions, and the scraper includes: a fixing plate mounted below a side portion of the groove roll and configured to provide a supporting force; and a plurality of insert blades integrally formed with the fixing plate, extending into the respective powder transfer grooves, and configured to separate the electrode material powder from the powder transfer grooves.

A first gear and a second gear are respectively mounted on roll shafts of the groove roll and the press roll, and mesh with each other to equalize circumferential speeds of the groove roll and the press roll.

The rolling unit includes a first rolling roll and a second rolling roll arranged parallel to and spaced apart from each other by a predetermined distance and configured to allow the electrode material powder transferred through the groove roll to pass therebetween and press the electrode material powder, thereby reducing a thickness of the electrode material powder.

In addition, a vibrator is further installed on an outer wall of the hopper and is configured to apply vibration to the hopper to facilitate discharge of the electrode material powder from the hopper.

### [Advantageous Effect]

The apparatus for continuously supplying a fixed amount of electrode material powder according to the present invention, configured as described above, enables the manufacture of a dry electrode film having a uniform density and thickness by continuously supplying a fixed amount of electrode material powder. In addition, since an amount of the electrode material powder supplied can be easily adjusted, a production speed of the electrode film can also be easily adjusted.

Furthermore, since a predetermined amount of the electrode material powder can be continuously supplied in a longitudinal direction, an electrode film having a uniform thickness in the longitudinal direction can be manufactured.

### [Description of Drawings]

FIGS. 1 and 2 are perspective views illustrating an apparatus for continuously supplying a fixed amount of electrode material powder according to an embodiment of the present invention.
FIG. 3 is a view for explaining an overall configuration and an operating manner of the apparatus for continuously supplying a fixed amount of electrode material powder according to an embodiment of the present invention.
FIG. 4 is a view illustrating a configuration of the hopper shown in FIG. 3.
FIG. 5 is a view for explaining an operation of the hopper shown in FIG. 4.
FIGS. 6 and 7 are views illustrating configurations of the groove roll, the press roll, and the reverse roll shown in FIG. 3.
FIG. 8 is an exploded perspective view illustrating the support block and the scraper shown in FIG. 7 in a disassembled state.
FIG. 9 is a view illustrating a state in which the electrode material powder is compressed by the press roll shown in FIG. 8.

### [Best Mode for Carrying Out the Invention]

Hereinafter, an embodiment of the present invention will be described in greater detail with reference to the accompanying drawings.

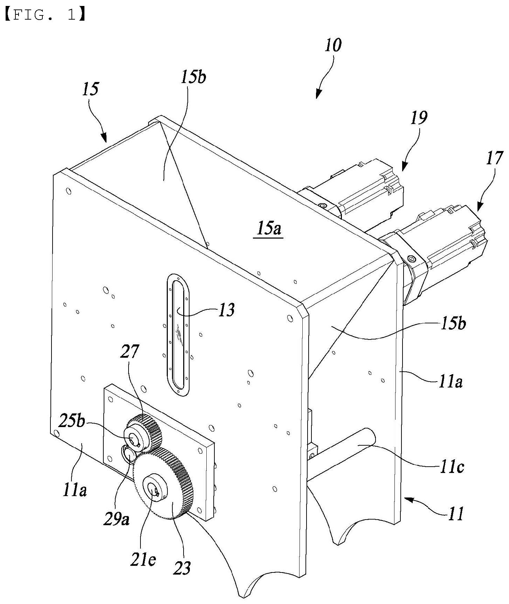

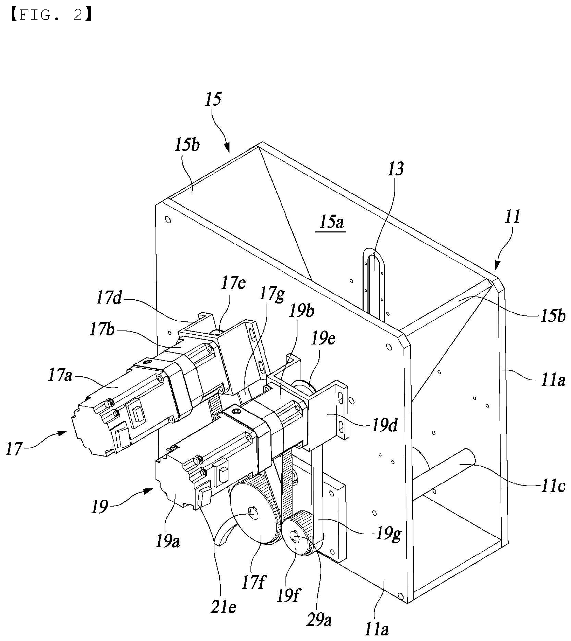

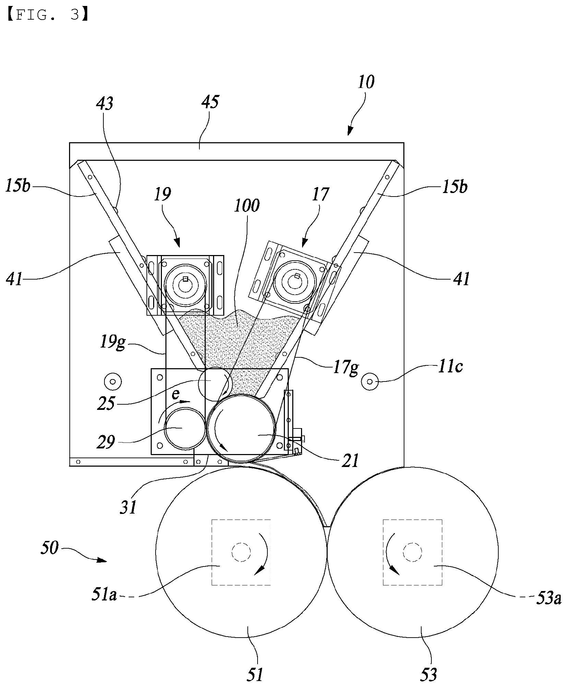

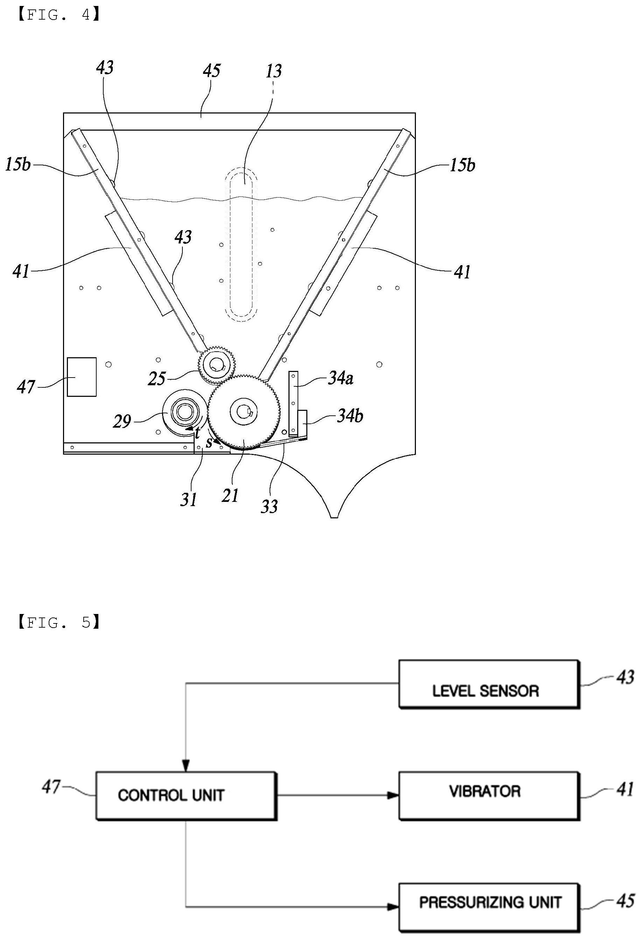

FIGS. 1 and 2 are perspective views illustrating an apparatus for continuously supplying a fixed amount of electrode material powder according to an embodiment of the present invention, and FIG. 3 is a view for explaining an overall configuration and an operating manner of the apparatus for continuously supplying a fixed amount of electrode material powder. In addition, FIG. 4 is a view illustrating a configuration of the hopper shown in FIG. 3, and FIG. 5 is a view for explaining an operation of the hopper shown in FIG. 4.

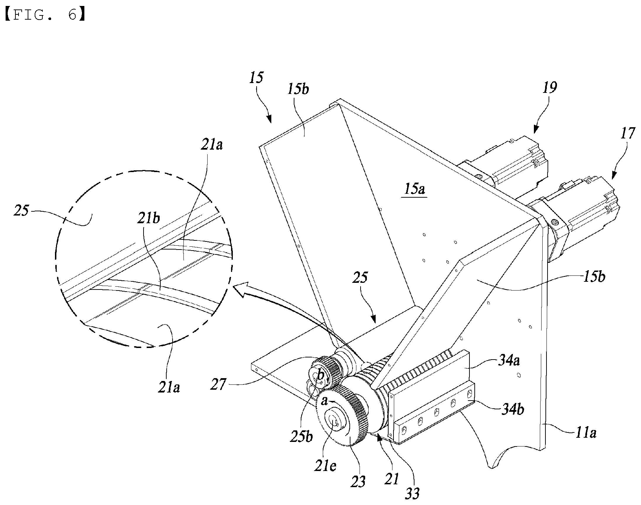

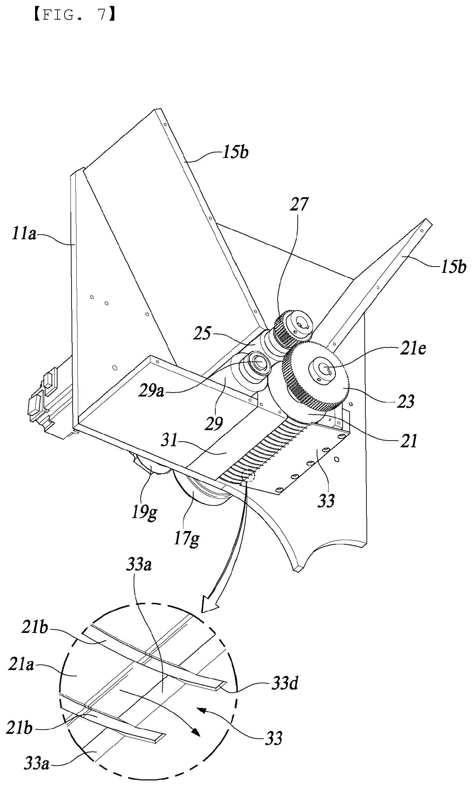

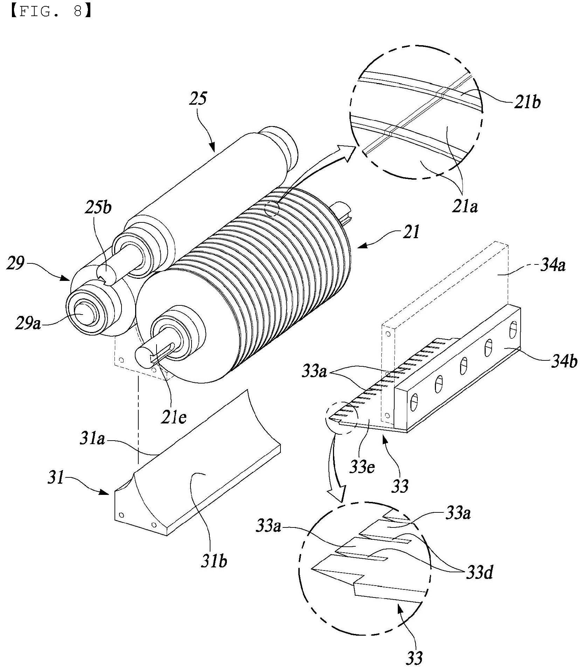

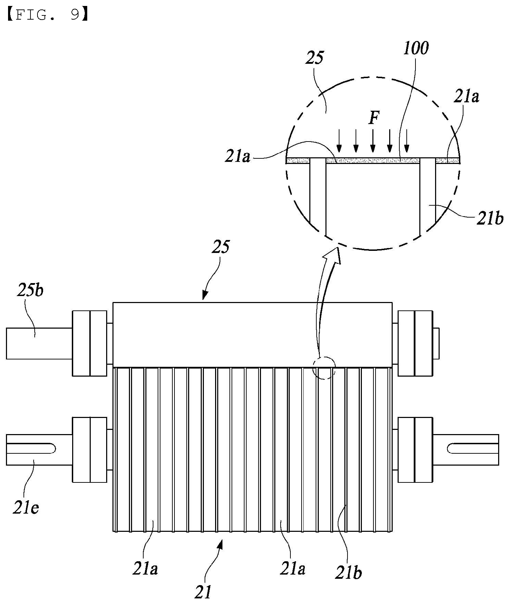

FIGS. 6 and 7 are views illustrating configurations of the groove roll, the press roll, and the reverse roll shown in FIG. 3. FIG. 8 is an exploded perspective view illustrating the support block and the scraper shown in FIG. 7 in a disassembled state, and FIG. 9 is a view illustrating a state in which the electrode material powder is compressed by the press roll shown in FIG. 8.

As illustrated, the apparatus 10 for continuously supplying a fixed amount of electrode material powder according to the present embodiment includes a support structure 11, a hopper 15, a groove roll 21, a first driving unit 17, a press roll 25, a reverse roll 29, a second driving unit 19, a scraper 33, a rolling unit 50, and a control unit 47.

The support structure 11 includes two vertical fixing plates 11a having a predetermined thickness. The vertical fixing plates 11a are spaced apart from and parallel to each other and accommodate the hopper 15, the groove roll 21, the press roll 25, and the reverse roll 29 therebetween. A spacing between the vertical fixing plates 11a is maintained by the hopper 15 and spacer rods 11c.

The hopper 15 receives electrode material powder 100 supplied from an outside and discharges the electrode material powder 100 downward. The groove roll 21 and the press roll 25 are provided at a lower portion of the hopper 15. The groove roll 21 and the press roll 25 rotate in opposite directions and allow the electrode material powder 100 to pass therebetween.

An internal space 15a of the hopper 15 is defined by the two vertical fixing plates 11a and two inclined plates 15b. The inclined plates 15b are plate-shaped members facing each other and defining an included angle of approximately 60 degrees. Accordingly, the hopper 15 is formed by portions of the vertical fixing plates 11a on both sides and the inclined plates 15b.

In addition, an observation window 13 is provided in a portion of one of the vertical fixing plates 11a covering the internal space 15a. The observation window 13 is a transparent window through which a remaining amount of the electrode material powder 100 accommodated in the internal space 15a can be viewed from the outside. An operator may check the remaining amount of the electrode material powder 100 at any time through the observation window 13.

One or more level sensors 43 are installed on the inclined plates 15b inside the hopper 15 or on the vertical fixing plates 11a forming the hopper 15 and defining the internal space 15a. The level sensors 43 sense the remaining amount of the electrode material powder 100 and transmit sensing information to the control unit 47 in real time. The control unit 47 receives the remaining-amount information transmitted in real time as feedback and transmits a signal to a powder supply unit, not shown, so that a predetermined amount of the electrode material powder 100 is constantly maintained in the hopper 15, thereby causing the electrode material powder 100 to be supplied to the hopper 15. In this case, the operator may wirelessly access the control unit 47 using a smartphone and check information regarding the remaining amount of the electrode material powder 100 provided in real time by the control unit 47.

Vibrators 41 are mounted on outer portions of the inclined plates 15b on both sides to apply vibration to the hopper 15 and facilitate discharge of the electrode material powder 100 from the hopper 15. The vibrators 41 apply vibrational energy to the hopper 15 so that the electrode material powder 100 can more easily slide downward. For example, when the electrode material powder 100 agglomerates and does not flow downward smoothly, vibration is applied to facilitate discharge thereof. The vibrators 41 are also controlled by the control unit 47.

A pressurizing unit 45 is installed at an upper portion of the hopper 15. The pressurizing unit 45 is supported by upper ends of the inclined plates 15b and the vertical fixing plates 11a and seals the internal space 15a. The pressurizing unit 45 adjusts pressure inside the internal space 15a so that the electrode material powder 100 is discharged under a constant pressure. For this purpose, the pressurizing unit 45 seals the internal space 15a. The pressurizing unit 45 may, of course, be opened from the hopper 15 to supply the electrode material powder 100 into the hopper 15.

When air is introduced into the internal space 15a while the internal space 15a is sealed by the pressurizing unit 45, the pressure inside the internal space 15a increases, and the increased pressure acts as a force that pushes the electrode material powder 100 downward.

The electrode material powder 100 is pressed downward by gravity. When a large amount of the electrode material powder 100 is loaded into the internal space 15a, the total weight thereof is greater than when a small amount of the electrode material powder 100 is loaded, and thus the groove roll 21 and the press roll 25 are pressed relatively strongly. Accordingly, a difference inevitably occurs between a force applied to the groove roll 21 and the press roll 25 when a small amount of the electrode material powder 100 is loaded and a force applied thereto when a relatively large amount of the electrode material powder 100 is loaded. As the force applied to the groove roll 21 and the press roll 25 increases, the density of the electrode material powder 100 discharged through powder transfer grooves 21a increases.

The pressurizing unit 45 serves to reduce the above-described pressure difference. That is, as the remaining amount of the electrode material powder 100 in the internal space 15a gradually decreases, the pressure inside the internal space 15a is increased. When the pressure inside the internal space 15a increases, the increased pressure pushes the electrode material powder 100 downward. Consequently, the density per unit volume of the discharged electrode material powder 100 is maintained constant. The pressurizing unit 45 is controlled by the control unit 47.

The pressurizing unit 45 may apply pressure to the electrode material powder 100 in a non-contact manner without directly contacting the electrode material powder 100. In this case, the pressurizing unit 45 may supply air having a predetermined pressure toward the hopper 15 to control the pressure applied to the electrode material powder 100. Applying pressure to the electrode material powder 100 in a non-contact manner may prevent agglomeration of the electrode material powder 100. Alternatively, the pressurizing unit 45 may apply pressure by directly contacting the electrode material powder 100.

Meanwhile, as illustrated in FIG. 6, the groove roll 21 is a member horizontally installed at the lower portion of the hopper 15. A roll shaft 21e is provided at a central axial portion of the groove roll 21. The roll shaft 21e is rotatably supported by the vertical fixing plates 11a on both sides.

Powder transfer grooves 21a and ring-shaped protrusions 21b are formed on an outer circumferential surface of the groove roll 21. Each powder transfer groove 21a is a groove having a predetermined width and depth and extends in a circumferential direction of the groove roll 21. The powder transfer grooves 21a are formed by cutting the outer circumferential surface of a cylindrical member having a predetermined diameter.

Each ring-shaped protrusion 21b is a ring-shaped projecting portion remaining at a side of a corresponding powder transfer groove 21a. The ring-shaped protrusions 21b are formed as a result of forming the powder transfer grooves 21a and partition adjacent powder transfer grooves 21a from each other.

A first gear 23 is fixed to one end portion of the roll shaft 21e, and a driven pulley 17f shown in FIG. 2 is fixed to an opposite end portion thereof. A detailed description thereof will be provided below.

The first driving unit 17 serves to rotate the groove roll 21. The first driving unit 17 includes a fixing bracket 17d, a servo motor 17a, a speed reducer 17b, a driving pulley 17e, a belt 17g, and the driven pulley 17f.

The fixing bracket 17d is a support structure fixed to one of the vertical fixing plates 11a and supports the speed reducer 17b. The speed reducer 17b is coupled to the fixing bracket 17d, receives rotational force from the servo motor 17a, and rotates the driving pulley 17e.

In addition, the driving pulley 17e is connected to the driven pulley 17f through the belt 17g. The belt 17g is a timing belt and transmits the rotational force of the driving pulley 17e to the driven pulley 17f. As the driven pulley 17f rotates, the groove roll 21 also rotates.

The press roll 25 is arranged parallel to the groove roll 21 and presses the electrode material powder 100 into the powder transfer grooves 21a while allowing the electrode material powder 100 to pass between the press roll 25 and the groove roll 21.

A roll shaft 25b is provided at a central axial portion of the press roll 25. The roll shaft 25b is rotatably supported by the vertical fixing plates 11a on both sides. A second gear 27 is mounted on one end portion of the roll shaft 25b. The second gear 27 meshes with the first gear 23. Since the groove roll 21 and the press roll 25 are connected by the first and second gears 23 and 27, the groove roll 21 and the press roll 25 simultaneously rotate in opposite directions at the same circumferential speed. As the groove roll 21 and the press roll 25 rotate in the direction of arrow a and the direction of arrow b, respectively, the electrode material powder 100 enters between the groove roll 21 and the press roll 25 and is then guided downward.

As illustrated in FIG. 9, the press roll 25 and the groove roll 21 are in line contact with each other. That is, the outer circumferential surface of the press roll 25 contacts the outer circumferential surfaces of the ring-shaped protrusions 21b. In addition, among the electrode material powder 100 introduced between the press roll 25 and the groove roll 21, the electrode material powder 100 positioned around peripheral portions of the powder transfer grooves 21a is pressed by the press roll 25 and subjected to pressure in the direction of arrow F. Accordingly, the electrode material powder 100 is compacted into the powder transfer grooves 21a and strongly agglomerated therein.

The reverse roll 29 is installed at a side of the groove roll 21 and is operated by the second driving unit 19. Like the press roll 25, the reverse roll 29 is a plain roller and is in line contact with the outer circumferential surface of the groove roll 21. A roll shaft 29a of the reverse roll 29 is rotatably supported by the vertical fixing plates 11a. In addition, a driven pulley 19f is mounted on one end portion of the roll shaft 29a. The driven pulley 19f receives rotational force from the second driving unit 19 and rotates.

The second driving unit 19 includes a fixing bracket 19d, a servo motor 19a, a speed reducer 19b, a driving pulley 19e, a belt 19g, and the driven pulley 19f.

The fixing bracket 19d is a support structure fixed to one of the vertical fixing plates 11a and supports the speed reducer 19b. The speed reducer 19b is coupled to the fixing bracket 19d, receives rotational force from the servo motor 19a, and rotates the driving pulley 19e. The driving pulley 19e is connected to the driven pulley 19f through the belt 19g. The belt 19g is a timing belt and transmits the rotational force of the driving pulley 19e to the driven pulley 19f. As the driven pulley 19f rotates, the reverse roll 29 also rotates.

In particular, the servo motor 19a is capable of rotating in forward and reverse directions and may also remain stopped. Accordingly, the reverse roll 29 may rotate in the direction of arrow e shown in FIG. 3 or in the opposite direction and may also remain stopped. Thus, a rotational speed ratio of the reverse roll 29 to the groove roll 21 may be adjusted over an almost unlimited range.

The reverse roll 29 supports the electrode material powder 100 accommodated in the powder transfer grooves 21a. For example, while the electrode material powder 100 moves from the press roll 25 to the reverse roll 29, the reverse roll 29 re-presses any electrode material powder 100 that has lifted from the powder transfer grooves 21a.

According to an embodiment, ring-shaped projecting portions, not shown, may be provided on the outer circumferential surface of the reverse roll 29. The ring-shaped projecting portions may enter the powder transfer grooves 21a and press and compact the electrode material powder 100.

Meanwhile, a guide block 31 is mounted below a contact portion between the groove roll 21 and the reverse roll 29. The guide block 31 is a block-shaped member made of Teflon, and both end portions thereof are fixed to the vertical fixing plates 11a.

Among the electrode material powder 100 that has passed between the groove roll 21 and the reverse roll 29, the guide block 31 receives the electrode material powder 100 released from the powder transfer grooves 21a and guides the received electrode material powder 100 in the direction of arrow s shown in FIG. 4. The electrode material powder 100 released from the powder transfer grooves 21a slides downward along a curved sliding surface 31b and reaches an upper portion of a first rolling roll 51.

An upper edge portion 31a and the curved sliding surface 31b are formed on the guide block 31. The upper edge portion 31a extends to a portion at which the groove roll 21 and the reverse roll 29 contact each other and prevents the electrode material powder 100 released from the powder transfer grooves 21a from escaping toward the reverse roll 29. That is, the upper edge portion 31a prevents the electrode material powder 100 from escaping in the direction of arrow t shown in FIG. 4.

The curved sliding surface 31b is a curved surface spaced apart from the outer circumferential surface of the groove roll 21 by a predetermined distance. The curvature of the outer circumferential surface of the groove roll 21 is equal to the curvature of the curved sliding surface 31b. Accordingly, a uniform gap is maintained between the outer circumferential surfaces of the ring-shaped protrusions 21b and the curved sliding surface 31b.

As described above, the curved sliding surface 31b guides the electrode material powder released from the powder transfer grooves 21a in the direction of arrow s and guides the electrode material powder to the first rolling roll 51 of the rolling unit 50. However, the electrode material powder 100 that has not been released from the powder transfer grooves 21a moves to the scraper 33 without contacting the guide block 31 and is then separated from the powder transfer grooves 21a by the scraper 33.

The scraper 33 serves to separate the electrode material powder 100 embedded in the powder transfer grooves 21a of the groove roll 21 from the powder transfer grooves 21a. The scraper 33 includes a fixing plate 33e and a plurality of insert blades 33a.

The fixing plate 33e is a plate-shaped member having a predetermined thickness and is supported by a mounting plate 34a and a connecting plate 34b. The mounting plate 34a is a rectangular plate having a predetermined thickness, and both end portions thereof are fixed to the vertical fixing plates 11a on both sides. The connecting plate 34b is a member connecting the mounting plate 34a and the scraper 33. The connecting plate 34b is bolted to both the scraper 33 and the mounting plate 34a.

The fixing plate 33e is fixed below a side portion of the groove roll 21 and includes the insert blades 33a at a distal end portion thereof. The insert blades 33a are integrally formed with the fixing plate 33e, extend into the respective powder transfer grooves 21a, and separate the electrode material powder 100 from the powder transfer grooves 21a. Distal end portions of the insert blades 33a contact bottom surfaces of the powder transfer grooves 21a.

In addition, protrusion-receiving slits 33d are formed between the respective insert blades 33a. As illustrated in an enlarged view in FIG. 7, the ring-shaped protrusions 21b are received in the protrusion-receiving slits 33d. Since the protrusion-receiving slits 33d are formed between the insert blades 33a, the insert blades 33a may contact the bottom surfaces of the powder transfer grooves 21a.

Meanwhile, the rolling unit 50 performs a calendering function of pressing and forming the electrode material powder 100 into a thinner form while allowing the electrode material powder 100 to pass therethrough. The rolling unit 50 includes the first rolling roll 51 and a second rolling roll 53. The first rolling roll 51 and the second rolling roll 53 are independently driven by respective roll driving units 51a and 53a. Rotational speeds of the first and second rolling rolls 51 and 53 are independently controlled.

The first rolling roll 51 and the second rolling roll 53 are parallel to and spaced apart from each other by a predetermined distance. The first rolling roll 51 and the second rolling roll 53 rotate in opposite directions. The electrode material powder 100 transferred by the groove roll 21 passes between the first rolling roll 51 and the second rolling roll 53 and is reduced in thickness. The electrode material powder formed into a sheet while passing between the first and second rolling rolls 51 and 53 is further compressed into a thinner form through a subsequent process.

The ratio between the rotational speeds of the first and second rolling rolls 51 and 53 may be variously adjusted. When the speed of the first rolling roll 51 is set to 1, the speed of the second rolling roll 53 is preferably adjusted to at least 1, for example, from 1.2 to 2. When the second rolling roll 53 rotates faster than the first rolling roll 51, the electrode material powder 100 may be separated from the first rolling roll 51, adhere to the second rolling roll 53, and move along the second rolling roll 53.

Each of the first rolling roll 51 and the second rolling roll 53 may be made of a special steel material having a chrome-plated surface.

Although the present invention has been described in detail with reference to specific embodiments, the present invention is not limited to the above-described embodiments, and various modifications may be made by those skilled in the art without departing from the technical spirit of the present invention.

### [Industrial Applicability]

The present invention is industrially applicable because a dry electrode film having a uniform density and thickness can be manufactured by continuously supplying a fixed amount of secondary-battery electrode material powder.

## Claims

1. An apparatus for continuously supplying a fixed amount of electrode material powder, comprising: a hopper configured to receive electrode material powder supplied from an outside and discharge the electrode material powder downward; a groove roll horizontally disposed at a lower portion of the hopper and having, on an outer circumferential surface thereof, a plurality of powder transfer grooves extending in a circumferential direction; a first driving unit configured to rotate the groove roll; a press roll arranged parallel to the groove roll and configured to allow the electrode material powder to pass between the press roll and the groove roll and press the electrode material powder into the powder transfer grooves; a scraper configured to separate the electrode material powder embedded in the powder transfer grooves of the groove roll from the powder transfer grooves; and a rolling unit configured to allow the electrode material powder transferred by the groove roll to pass therethrough and roll the electrode material powder.

2. The apparatus for continuously supplying a fixed amount of electrode material powder according to claim 1, further comprising a reverse roll disposed at a side of the groove roll and configured to rotate in a forward direction or a reverse direction or remain stationary by means of a second driving unit while being in contact with the outer circumferential surface of the groove roll.

3. The apparatus for continuously supplying a fixed amount of electrode material powder according to claim 2, further comprising a guide block disposed below the groove roll and the reverse roll, spaced apart from the outer circumferential surface of the groove roll by a predetermined distance, and configured to guide the electrode material powder released from the powder transfer grooves to the rolling unit.

4. The apparatus for continuously supplying a fixed amount of electrode material powder according to claim 1, wherein each of the powder transfer grooves has a predetermined width and depth and is defined by ring-shaped protrusions, and wherein the scraper comprises: a fixing plate mounted below a side portion of the groove roll and configured to provide support; and a plurality of insert blades integrally formed with the fixing plate, extending into the respective powder transfer grooves, and configured to separate the electrode material powder from the powder transfer grooves.

5. The apparatus for continuously supplying a fixed amount of electrode material powder according to claim 1, wherein a first gear and a second gear are respectively mounted on roll shafts of the groove roll and the press roll and mesh with each other to equalize circumferential speeds of the groove roll and the press roll.

6. The apparatus for continuously supplying a fixed amount of electrode material powder according to claim 1, wherein the rolling unit comprises a first rolling roll and a second rolling roll arranged parallel to and spaced apart from each other by a predetermined distance and configured to allow the electrode material powder transferred by the groove roll to pass therebetween and press the electrode material powder, thereby reducing a thickness of the electrode material powder.

7. The apparatus for continuously supplying a fixed amount of electrode material powder according to claim 6, wherein the second rolling roll rotates at a higher speed than the first rolling roll such that the sheet-shaped electrode material powder having passed between the first rolling roll and the second rolling roll adheres to and moves along the second rolling roll.

8. The apparatus for continuously supplying a fixed amount of electrode material powder according to claim 1, further comprising a vibrator installed on the hopper and configured to apply vibration to the hopper to facilitate discharge of the electrode material powder from the hopper.

9. The apparatus for continuously supplying a fixed amount of electrode material powder according to claim 1, further comprising a pressurizing unit configured to apply a predetermined pressure to the electrode material powder accommodated in the hopper.

10. The apparatus for continuously supplying a fixed amount of electrode material powder according to claim 1, wherein the hopper comprises inclined plates and vertical fixing plates defining a funnel shape inclined downward, and wherein a level sensor configured to sense a level of the electrode material powder contained in the hopper is disposed on at least one of the inclined plates inside the hopper and the vertical fixing plates.
